Europäisches Patentamt

European Patent Office

Office européen des brevets

(19)

(11) Publication number: **0 193 363 B1**

## (12) EUROPEAN PATENT SPECIFICATION

(45) Date of publication of patent specification: **18.09.91**

(51) Int. Cl.⁵: **C04B 20/06**, C04B 18/06, C04B 14/12

(21) Application number: **86301254.8**

(22) Date of filing: **21.02.86**

(54) Inorganic foamed granules.

(30) Priority: **22.02.85 JP 35066/85**
**30.04.85 JP 94047/85**

(43) Date of publication of application:
**03.09.86 Bulletin 86/36**

(45) Publication of the grant of the patent:
**18.09.91 Bulletin 91/38**

(84) Designated Contracting States:
**GB SE**

(56) References cited:
**EP-A- 0 039 798**
**EP-A- 0 049 663**
**DE-A- 2 417 519**
**DE-A- 3 326 599**
**US-A- 4 226 630**

**F.I.P. Manual of Lightweight aggregate concrete, 2nd ed., P. 29**

**F.M. Lea, The chemistry of cement and concrete, 3rd et., P. 455,**

**J. G. Peacey, The iron blast furnace, P. 8**

(73) Proprietor: **UBE INDUSTRIES, LTD.**
**12-32, Nishihonmachi 1-chome**
**Ube-shi, Yamaguchi-ken 755(JP)**

(72) Inventor: **Kobayashi, Waichi R&D Center, Cement Division**
**Ube Industries, Ltd. 1-6 Okinoyama Kogushi**
**Ube-shi Yamaguchi-ken(JP)**
Inventor: **Usui, Kouji R&D Center, Cement Division**
**Ube Industries, Ltd. 1-6 Okinoyama Kogushi**
**Ube-shi Yamaguchi-ken(JP)**
Inventor: **Otaka, Satoshi R&D Center, Cement Division**
**Ube Industries, Ltd. 1-6 Okinoyama Kogushi**
**Ube-shi Yamaguchi-ken(JP)**
Inventor: **Matsuda, Kenichior Ube Cement Works**
**Ube Industries, Ltd. 1978-2, Kogushi**
**Ube-shi Yamaguchi-ken(JP)**
Inventor: **Sakka, Katsuzo Ube Cement Works**
**Ube Industries, Ltd. 1978-2, Kogushi**
**Ube-shi Yamaguchi-ken(JP)**

EP 0 193 363 B1

(74) Representative: **Arthur, Bryan Edward et al Withers & Rogers 4 Dyer's Buildings Holborn London EC1N 2JT(GB)**

## Description

### Field of the invention

This invention relates to inorganic foamed granules and a process for the preparation of the same.

### Description of prior arts

Inorganic foamed granules are lightweight, and are accordingly employed widely as lightweight aggregates for construction of buildings, extenders for fertilizer, detergent or paint, absorbents, soil improvers, etc. Typical known inorganic foamed granules are classified into two groups, namely, artificial material-originating balloons such as glass balloons which are obtained from artificial raw materials, and natural material-originating balloons such as volcanic ash balloons, perlite, fly ash balloon and expanded shale.

The glass balloons are foamed granules and are obtained by expanding granules comprising sodium silicate as the main component which are produced by a liquid-drop method or a dry gelation method.

The volcanic ash balloons are produced by heating volcanic ash (containing volcanic glass) to foam the ash. The perlite is likewise produced by heating pearlite, obsidian(volcanic glass), rosinous sand, trachyte or the like to foam it. The fly ash balloons are produced by firing dust coal and subjecting the resulting coal ash to floatation in water. The expanded shale is produced by foaming a shale by heating.

With respect to the known foamed granules, certain drawbacks are noted. For instance, the preparation of the glass balloons requires complicated procedures. The preparation of the volcanic ash balloons, perlite, expanded shale, etc. requires digging of minerals from mountainous area and pulverizing the digged minerals. Thus, the preparation of natural material-originating balloons is not economical from the viewpoint of the preparatin of the raw material. Further, the natural raw materials, namely, minerals recently are less available, because the digging work possibly causes environmental disruption. The fly ash balloons are contained in coal ashes which are by-produced in a thermoelectric power plant and accordingly are not available stably.

Furthermore, most of known inorganic foamed granules have a bulk density(unit weight) in the range of 0.02 to 0.05 kg/ℓ or 0.15 to 0.4 kg/ℓ, and there are relatively few inorganic foamed granules having a bulk density between these two range.

### SUMMARY OF THE INVENTION

It is an object of the present invention to provide novel inorganic foamed granules.

It is another object of the invention to provide a process for the preparation of the novel inorganic foamed granules.

It is a further object of the invention to provide a new use for residue produced in a coal gasification process, which has not found advantageous use until now.

There is provided by the present invention an inorganic foamed granule comprising 60 wt.% or less of $SiO_2$, 20 wt.% or more of $Al_2O_3$, and 5 wt.% or more of $CaO$ and having a bulk density in the range of 0.05 to 1.2 kg/ℓ.

The inorganic foamed granules of the present invention are novel inorganic foamed granules having a composition clearly different from various known inorganic foamed granules such as glass balloons, volcanic ash balloons, perlite, fly ash balloons and expanded shale.

The inorganic foamed granules of the invention are easily prepared by a process comprising heating an amorphous residue obtained by partial oxidation of coal, at a temperature of not lower than 600°C, whereby foaming the amorphous residue.

In one aspect, the inorganic foamed granules of the invention preferably have a bulk density(i.e., unit weight) in the range of 0.05 to 0.6 kg/ℓ, which can be prepared by heating ashes(residue) of granular size of not greater than 20 mm obtained by partial oxidation of coal, at a temperature in the range of 700-1,200°C.

In another aspect, the inorganic foamed granules of the invention preferably have a bulk density(i.e., unit weight) in the range of 0.6(not inclusive) to 1.2 kg/ℓ, which can be prepared by heating ashes(residue) of granular size of not greater than 2.5 mm obtained by partial oxidation of coal, at a temperature in the range of 650 - 850°C.

### BRIEF DESCRIPTION OF THE DRAWINGS

Fig. 1 illustrates graphically a variation of the diameter of a residue of coal gasification process which has a mean diameter of 10 mm at a temperature rising from 400°C to 1,300°C at a rising rate of 5°C/min.

Fig. 2 illustrates graphically a relationship between the heating temperature and the bulk density(i.e., unit weight) of the foamed granules obtained from Residue I, Residue II and obsidian in Example 2 and Comparison Example 2.

## DETAILED DESCRIPTION OF THE INVENTION

The inorganic foamed granules of the invention are prepared from a coal residue which is produced in a coal gasification process and which previously has not found effective use. The above-mentioned coal residue is easily foamed at a temperature lower than the conventionally employed minerals. Accordingly, the present invention is of value from the viewpoint of effective use of previously wasted by-products. Further, the present invention is of value from the viewpoint of energy saving in the process of the preparation of inorganic foamed granules.

The inorganic foamed granules of the invention are light in weight and have high strength. Further, the inorganic foamed granules of the invention have low thermal conductivity and hence show an increased heat insulating property. Furthermore, if desired, water-absorbing capacity of the foamed granules can be easily varied through variation of preparation conditions therefor. Accordingly, the inorganic foamed granules of the invention find a wide variety of uses.

The inorganic foamed granules of the invention are granules comprising $SiO_2$, $CaO$ and $A\ell_2O_3$. In addition to these three main componets, the foamed granules possibly and advantageously contain iron oxide, $MgO$, $Na_2O$ and $K_2O$.

The inorganic foamed granules of the invention comprise 60 wt.% or less, preferably 30 - 60 wt.%, of $SiO_2$, 20 wt.% or more, preferably 20 - 40 wt.% of $A\ell_2O_3$, and 5 wt.% or more, preferably 5 - 30 wt.%, of $CaO$. These three indispensable components are comprised in the inorganic foamed granules in a total amount of, generally, not less than 60 wt.%, preferably 70 - 95 wt.%, and most preferably 75 - 90 wt.%.

In addition to the three indispensable components, the foamed granules of the invention possibly and advantageously contain iron oxide, $MgO$, $Na_2O$ and $K_2O$ in a total amount of, generally, not more than 40 wt.%, preferably 5 - 30 wt.%, and most preferably 10 - 25 wt.%, all being based on the amount of the foamed granules. Preferably, iron oxide is contained in an amount of 2 - 15 wt.%(as $Fe_2O_3$), $MgO$ is contained in an amount of 1 - 7 wt.%, $Na_2O$ is contained in an amount of 1 - 6 wt.%, and $K_2O$ is contained in an amount of O - 2 wt.%, all being based on the amount of the foamed granules. Further, the inorganic foamed granules of the invention may contain a very small amount of $TiO_2$, $SO_3$, sulfide, other sulfur-containing compounds and carbonaceous components.

The inorganic foamed granules of the invention are lightweight granules having a unit weight in the range of 0.05 to 1.2 kg/$\ell$. This range of unit weight can be expressed in terms of a specific gravity under oven-dry of approx. 0.1 to 2.1. Since the inorganic foamed granules of the invention are so lightweight, these are advantageously employed as lightweight aggregates.

The inorganic foamed granules of the invention have void in the granule. The void can be an independent (closed) void or a continuous void. Either of foamed graules having a relatively great number of closed voids and foamed granules having a relatively great number of continuous void can be prepared as desired, by controlling, for instance, the heating temperature and/or heating period in the process of their production. The inorganic foamed granules predominantly having closed voids show extremely low water-absorption. In the case that the foamed granules of this type are used as lightweight aggregates for admixing with a cement, the amount of water to be introduced into the mixture can be decreased. Therefore, a cured cement using the closed void-type granules shows a high strength and is prominently durable under repeated freezing-thawing conditions. The foamed granules predominantly having a continuous void show a high water-retention ability, and hence are advantageously employed as a soil improver.

The foamed granules of the invention contain a great number of voids, and accordingly these show low thermal conductivity, generally, 0.05 kcal/m·h·°C or less. Therefore, the foamed granules of the invention are advantageously employed as thermal insulating materials.

The inorganic foamed granules of the invention show higher mechanical strength than the conventional inorganic foamed granules. Generally, an average crushing strength of the foamed granules of the invention is not lower than 2.5 kgf(the mean value is obtained using 20 foamed granules having particle sizes within 2 - 10 mm which are selected at random). Further, the inorganic foamed granules of the invention having a unit weight in the range of 0.6 to 1.2 kg/$\ell$ (granular size: not greater than 3.5 mm, advantageously from 0.5 to 2.8 mm) show prominently higher mechanical strength such as an average crushing strength in the range of 10 to 70 kgf. Accordingly, the inorganic foamed granules of the invention is very resistant to disruption in their storage or transportation. Further, the use of the inorganic foamed granules as the lightweight aggregates in building structural units is very advantageous to increase the mechanical strength of structural units.

There is no specific limitation on the granular size of the inorganic foamed granules of the invention, and the foamed granules of any granular size can be employed according to their uses. Generally, the granular size ranges from approx. 50 μm to 50 mm, and a granular size(i.e., particle size) in the range of approx. 0.5 to 20 mm is preferred.

A process of the preparation of the inorganic foamed granules of the invention is described below.

The inorganic foamed granules of the invention are prepared by heating an amorphous residue obtained by partial oxidation of coal under specific conditions. Thus, the raw material for the preparation of the inorganic foamed granules of the invention is an amorphous residue obtained by partial oxidation of coal. An ash obtained upon completely firing a particulate coal does not effectively foam and cannot be used for the preparation of the inorganic foamed granules of the invention.

The amorphous residue obtained by partial oxidation of coal for the use in the process for the preparation of the inorganic foamed granules of the invention contains granules having a granular size of not greater than 0.6 mm in an amount of not more than 20 wt.%. This amorphous residue is further preferred to contain sulfur in the form of sulfides and unburnt carbon in a total amount of not more than 1 wt.%.

The amorphous residue advantageously employable for the preparation of the inorganic foamed granules of the invention is available as a residue produced by a process of a synthetic gas through partial oxidation of coal. Examples of the process of the preparation of synthetic gas from coal include Lurgi process, Winkler process, Koppers-Totzek process, Otto-Rummel process, KDV process, Lurgi slagging process, Synthane process, WH process, Ugas process, HYGAS process, Japan Coal Technology Institute process, Pressure-fuidizin hydrogenatic gasification process, Hybrid process, HTW process, BIGAS process, Shell(Shell-Koppers) process, Saarberg-Otto process, Sumitomo process, and Texaco process. As the raw materials for the preparation of the foamed granules of the invention, residues obtained in coal gasification processs such as Koppers-Totzek process, Otto-Rummel process, Lurgi slagging process, Shell(Shell-Koppers) process, and Texaco process in which the partial oxidation of coal is performed at a temperature of not lower than the softening temperature of ash(i.e., residue) of the employed coal within a gasification furnace are preferably used.

For instance, Texaco process includes the following procedure: coal is charged into a coal gasification furnace in the form of a aqueous slurry and heated under pressure at a temperature of not lower than the softening temperature of ash of the coal, generally, in the range of 1,300 to 1,500°C, whereby partial oxidiation of the coal is done. In this procedure, a melted or half-melted residue is obtained, and this residue is generally cooled with water and exhausted from the coal gasification furnace, if necessary, upon being crushed. More details of the coal gasification process utilizing Texaco process, etc. are described in Chemical Economy (of Japan), 1981, August & September.

The composition of the residue obtained upon partial oxidation of coal varies with nature of the coal employed in the coal gasification process within certain ranges. However, most of residues obtained upon partial oxidation of coal can be employed as the raw material, regardless of nature of the coal used.

The above-described residue generally contains 55 - 30 wt.% of $SiO_2$, 20 - 40 wt.% of $Al_2O_3$, and 5 - 30 wt.% of $CaO$, as well as a small amount of sulfides, other sulfur compounds, and unburnt carbon.

There is no specific limitation on the granular size of the residue employed in the process of the preparation of the inorganic foamed granules of the invention. However, granular residue having a size of not greater than 20 mm is generally employed. A granular residue having a size of not greater than 0.3 mm, particularly not greater than 0.15 mm, sometimes does not effectively foam under certain heating conditions or is apt to fuse with other granular residues. Accordingly, such fine granules are advantageously removed in advance of the heat-treatment, unless specifically fine foamed granules are desired. The adjustement of the granular size of the residue exhausted from a coal gasification furnace can be advantageously done by crushing and sieving. While most of the granular residue having a size of not greater than 0.15 mm is removed by the sieving, a certain portion of the fine granules attached to greater granules remain unsieved. Such a small amount of the fine granular residue does not disturb foaming of the granules of greater sizes, so long as the amount of the fine granules does not exceed 20 wt.%. In the case that a fine granular residue such as a granular residue having a size of not greater than 0.3 mm, particularly not greater than 0.15 mm is to be foamed, it is preferably heated at a relatively low temperature upon separation thereof from greater granules, whereby efficiently producing fine inorganic foamed granules(porous granules).

The residue which is thus adjusted with respect to the granular size is then heated.

The heating is performed at a temperature of not lower than 600°C, preferably 600-1,300°C and most preferably 700-1,200°C. The residue hardly foams effectively at a temperature of apparently lower than

600°C, and the foamed granules are apt to fuse with each other at a temperature of higher than 1,300°C so that the resulting foam structure may diminish. The heating is preferably started from a temperature of not higher than 600°C and at a temperature-rising rate of not higher than 150°C/min, preferably 1-100°C/min.

The heating can be carried out, for instance, by heating the residue in a rotary kiln at gradually rising temperatures, by directly charging the residue into a temperature-controlled furnace.

The heating process using the gradually rising temperature is advantageously utilized particularly in industry. In the industrial process using a rotary kiln, the rate of temperature elevation is prferably set not to exceed 20°C/min. More rapid temperature rising sometimes disturbs production of independent foam(void) in the granules so that the resulting foamed granules are made to be more water-absorbent.

In the case that the residue is charged directly into the pre-heated furnace, the foaming of the residue is strongly influenced by the heating conditions such as the heating temperature and heating period. The control of the foaming can be done by varying the heating temperature and heating period independently or in combination.

According to the study of the present inventors, the favorable foaming is effectively attained when the residue is heated at a temperature of not lower than 600°C for a period of 15 sec. to 15 min. For instance, a residue having a mean granular size of 3-5 mm which is obtained by coal gasification of Grade Greta coal (hereinafter referred to as "GG residue") gives foamed granules having a unit weight of 0.121 kg/ℓ upon being heated at 900°C for 5 min., and otehwise gives foamed granules having a unit weight of 0.102 kg/ℓ upon being heated at 1,100°C for 15 sec. In another example, a residue having a mean granular size of 3-5 mm which is obtained by coal gasification of Coal Valley coal gives foamed granules having a unit weight of 0.156 kg/ℓ upon being heated at 900°C for 5 min., and otehwise gives foamed granules having a unit weight of 0.123 kg/ℓ upon being heated at 1,100°C for 30 sec.

The heating process for preparing the inorganic foamed granules of the invention can be performed at a temperature lower than and for a period of time shorter than those of the conventional processes for the preparation of volcanic ash balloons and perlite.

In more detail, a trachyte having a mean granular size of 3-5 mm gives foamed granules having a unit weight of 0.135 kg/ℓ upon being heated at 1,200°C for 12.5 sec., and otehwise gives foamed granules having a unit weight of 0.143 kg/ℓ upon being heated at 1,100°Cfor 30 sec. In another example, an obsidian gives foamed granules having a unit weight of 0.228 kg/ℓ upon being heated at 1,100°C for 1 min. Thus, a higher temperature or a longer heating period is required to prepare well foamed granules according to the conventional process.

Accordingly, the inorganic foamed granules of the invention can be prepared utilizing a heat energy less than that required in the preparation of the conventional foamed granules.

Further, the foamed granules of the invention can be prepared through rapid foaming in the heat-treatment, while the conventional granules are prepared through rather slow foaming. Therefore, no long heating period is required for performing the process for the preparation of the inorganic foamed granules of the invention. Thus, the process of producing the foamed granules according to the invention is easily carried out.

The above-mentioned residue foams or expands to an extent of approx. 1.01 to 2.5 times as much as the original granular size by the heat-treatment. Im more detail, a granular residue having a granular size of not greater than 2.5 mm expands to an extent of approx. 1.01 to 1.4 times, and a granular residue having a granular size of greater than 2.5 mm expands to an extent of approx. 1.3 - 2.5 times.

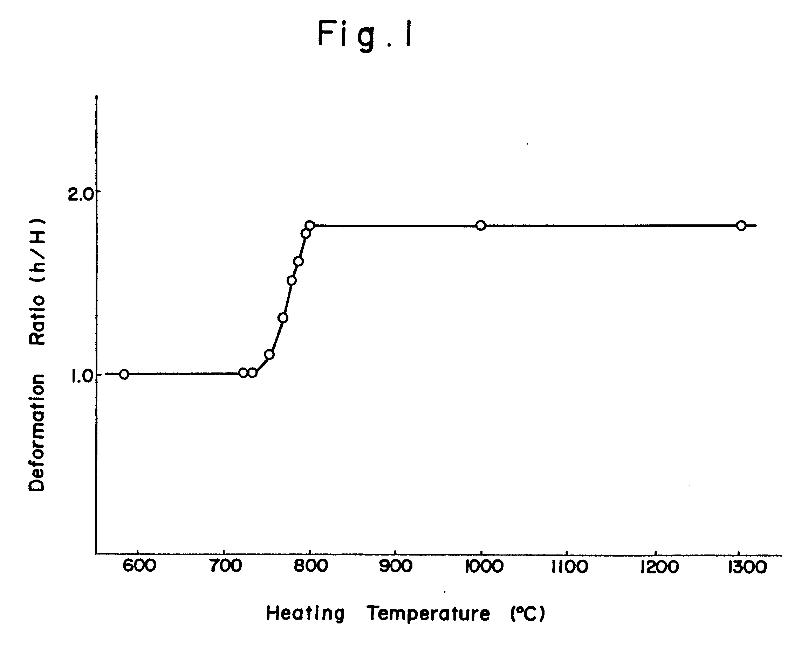

Fig. 1 illustrates a relationship between the foaming conditions in terms of deformation ratio (which is obtained by measuring the size of the residue) and the temperature. This relationship is obtained by heating the GG residue having a mean diameter of 10 mm at a temperature rising from 400°C at a rate of 5°C/min. The deformation ratio is expressed in terms of an expansion ratio in one direction and is calculated from the granular diameter(H) prior to the heat-treatment and the granular diameter(h) upon heat-treatment, according to the equation of h/H.

As is clear from Fig. 1, the employed residue foams or expands rapidly as from approx. 730°C and the expanding terminates at a temperature of approx. 790°C. Further heating is not effective to cause further foaming.

According to the process for the preparation of the foamed granules according to the invention, if desired, granules having independent voids can be converted into granules having continuous void by controlling the heating conditions such as heating temperature and heating period applied to the granules having independent voids. In more detail, the foamed granules are initially produced in the form of granules having predominently independent voids. Such granules show little water-absorption. If the granules having predominently independent voids are further heated, the independent voids are made to associate with each other to give a continuous void which is open to outside. Otherwise, the foamed granules having continuous void can be predominently produced if the heating is performed at a temperature-rising rate of 20°C/min.

The foamed granules having continuous void show high water-absorption and are advantageously employed as soil improvers.

The heating process for the preparation of the inorganic foamed granules of the invention can be performed in the furnace conventionally employed for the production of volcanic balloon or perlite. For example, a rotary kiln and a furnace for gas-stream firing can be employed.

It is not clearly understood why the residue produced by partial oxidation of coal favorably foams or expands. The following is an assumption.

The residue produced by partial oxidation of coal contains easily-expandable or easily-foaming materials such as unburnt carbon and sulfides which are converted easily into gas under heating. Thus, these materials are converted into gas under heating to produce a great number of voids. Further, the residue is likely active in comparison with minerals such as volcanic glass, and the above-mentioned materials are easily converted into gas even at a relatively low temperature.

It is apparent, accordingly, that the inorganic foamed granules of the invention are also employable as extenders for fertilizers, detergents and paints, absorbents, smelting aids, and filtering aids, in addition to the aforementioned lightweight aggregates and soil improvers.

The present invention is further described by the following examples and comparison examples.

## EXAMPLE 1

On a ceramic evaporating dish was placed 100 g. of a residue (true specific gravity: 2.81, unit weight: 1.54 kg/ℓ, m.p.: 1,360°C) collected from a coal gasification furnace according to a Texaco process. This was then placed in an electric furnace equipped with an automatic temperature-controlling device utilizing molybdenum silicide. The temperature of the electric furnace initially was 400°C.

The chemical composition and granular size distribution of the employed residue are set forth in Tables 1 and 2, respectively. The residue was confirmed to be amorphous by X-ray diffraction analysis.

The temperature of the electric furnace was then elevated to 900°C at a rate of 5°C/min. When the temperature reached 900°C, the residue was taken out of the furnace. Thus, inorganic foamed granules were produced.

The resulting foamed granules had a specific gravity under oven-dry of 0.7, a unit weight of 0.46 kg/ℓ, a 24 hr-water absorption of 2.6 wt.%, and a mean crushing strength of 6.4 kgf. The chemical composition and granular size distribution of the resulting foamed granules are set forth in Tables 1 and 2, respectively.

The measurements of various values were made using the following process and apparatus. The same measuring process and apparatus were also utilized in the measurement of the corresponding values in other examples and comparison examples.

## Measurement

| | |
|---|---|
| Specific gravity under oven-dry and 24 hr-water absorption: | measured according to JIS-A-1134 and JIS-A-1135. |
| True specific gravity: | measured according to JIS-A-2205. |
| Unit weight: | a measuring cylinder of 100 ml vol. containing a sample (residue or foamed granules) was vibrated as many as given times to contain the sample of 100 ml volume therein, and the weight of the contained sample was determined. |
| Analysis: | made according to JIS-M-8852. |
| Crushing strength: | determined on 20 samples by the use of Kiya Hardness Tester. |
| Melting point: | measured according to JIS-M-8801. |

Table 1

| Component | Residue (wt.%) | Inorganic Foamed Granules (wt.%) |
|---|---|---|
| ig. loss | + 0.1 | O |
| $SiO_2$ | 36.8 | 37.4 |
| $Al_2O_3$ | 29.9 | 30.3 |
| $Fe_2O_3$ | 7.3 | 7.4 |
| CaO | 18.4 | 18.6 |
| MgO | 4.0 | 4.1 |
| $Na_2O$ | 2.0 | 2.0 |
| $K_2O$ | 0.3 | 0.3 |
| Unburnt carbon | 1.26 | O |
| Sulfide | 0.23 | O |

Table 2

| Granular Size (mm) | Residue (wt.%) | Inorganic Foamed Granules (wt.%) |
|---|---|---|
| – 20 | 1 | 1 |
| 20 – 10 | 1 | 15 |
| 10 – 5 | 28 | 48 |
| 5 – 2.5 | 45 | 28 |
| 2.5 – 1.2 | 17 | 8 |
| 1.2 – 0.6 | 4 | 2 |
| 0.6 – 0.3 | 2 | 2 |
| 0.3 – | 2 | 2 |

The obtained inorganic foamed granules had the composition as set forth in Table 1, and were expanded as many as approx. 1.5 times as compared with the residue.

COMPARISON EXAMPLE 1

The procedure of Example 1 was repeated except that the shale (true specific gravity: 2.56, unit weight: 1.10 kg/ℓ, m.p.: 1,210°C) as set forth in Table 3 was employed in place of the residue and the maximum heating temperature was set to 1,180°C. Thus, foamed granules were produced. The size distribution of the employed shale is set forth in Table 4.

The resulting foamed granules had a specific gravity under oven-dry of 0.90, a unit weight of 0.64 kg/ℓ, a 24 hr-water absorption of 14.9 wt.%, and a mean crushing strength of 1.8 kgf. The chemical composition and granular size distribution of the resulting foamed granules are set forth in Tables 3 and 4, respectively.

## Table 3

| Component | Shale (wt.%) | Inorganic Foamed Granules (wt.%) |
|---|---|---|
| ig. loss | 2.43 | 0 |
| $SiO_2$ | 63.6 | 65.2 |
| $Al_2O_3$ | 18.3 | 18.8 |
| $Fe_2O_3$ | 5.5 | 5.6 |
| CaO | 2.1 | 2.2 |
| MgO | 1.6 | 1.6 |
| $Na_2O$ | 3.3 | 3.4 |
| $K_2O$ | 3.1 | 3.2 |
| Unburnt carbon | 0 | 0 |
| Sulfide | 0 | 0 |

9

## Table 4

| Granular Size (mm) | Shale (wt.%) | Inorganic Foamed Granules (wt.%) |
|---|---|---|
| - 20 | 0 | 0 |
| 20 - 10 | 0 | 1 |
| 10 - 5 | 15 | 21 |
| 5 - 2.5 | 35 | 34 |
| 2.5 - 1.2 | 22 | 18 |
| 1.2 - 0.6 | 10 | 10 |
| 0.6 - 0.3 | 7 | 7 |
| 0.3 - | 11 | 9 |

The obtained inorganic foamed granules had the size distribution as set forth in Table 4, and were expanded as many as approx. 1.2 times as compared with the shale.

Further, it was confirmed that the inorganic foamed granules obtained in Example 1 had higher crushing strength and lower water absorption than the inorganic foamed granules obtained in Comparison Example 1.

### EXAMPLE 2

Residue I and Residue II (mean granular size: 5 - 1.2 mm for either residue) having compositions as given in Table 5 and Table 6, respectively, were expanded in an elecric furnace at the temperatures set forth below and for a period of the indicated time.

Residue I had a unit weight of 1.54 kg/ℓ and Residue II had a unit weight of 1.40 kg/ℓ. X-ray diffraction analysis indicated that both were amorphous.

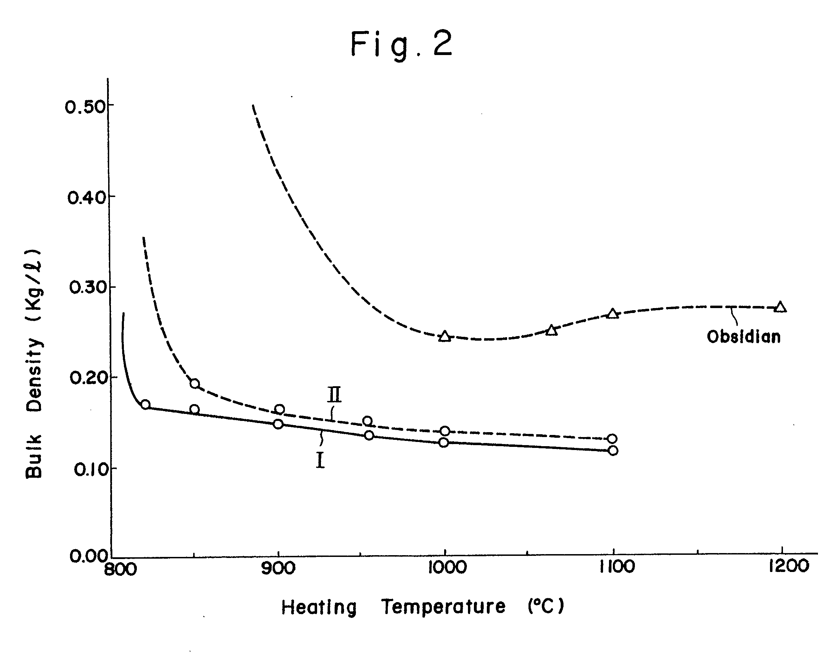

The relationship between the heating temperature and the unit weight(bulk density) of the foamed granules is given in Fig. 2.

The composition of the inorganic foamed granules obtained from Residue I by heating at 1,000°C is set forth in Table 5, and the composition of the inorganic foamed granules obtained from Residue II by the same heating is set forth in Table 6. The inorganic foamed granules from Residue I by heating at 1,000°C showed a 24 hr-water absorption of 11.0 % and a crushing strength of 4.02 kgf, and the inorganic foamed granules from Residue II by the same heating showed a 24 hr-water absorption of 9.3 wt.%, and a crushing strength of 4.32 kgf.

### COMPARISON EXAMPLE 2

The procedure of Example 2 was repeated except that an obsidian(volcanic glass) was employed in place of the residue and the heating conditions were changed as set forth below. Thus, foamed granules were produced.

The composition of the employed obsidian is set forth in Table 7. The unit weight of the obsidian was 1.23 kg/ℓ.

The relationship between the heating temperature and the unit weight(bulk density) of the foamed granules is given in Fig. 2.

The composition of the foamed granules obtained by heating at 1,000°C is set forth in Table 7. The foamed granules by heating at 1,000°C showed a 24 hr-water absorption of 18.2 wt.%, and a crushing strength of 4.86 kgf.

| Heating Temperature | Heating Time | | |
|---|---|---|---|
| | Residue I | Residue II | Obsidian |
| 825°C | 15 min. | – | – |
| 850°C | 12 min. | 15 min. | – |
| 825°C | 4 min. | 12 min. | – |
| 900°C | 30 sec. | 1 min. | 12 min. |
| 1100°C | 10 sec. | 15 sec. | 1.5 min. |
| 1200°C | – | – | 30 sec. |

Table 5

| Component | Residue I (wt.%) | Inorganic Foamed Granules (wt.%) |
|---|---|---|
| ig. loss | 0.3 | 0 |
| $SiO_2$ | 39.0 | 39.5 |
| $Al_2O_3$ | 27.9 | 28.2 |
| $Fe_2O_3$ | 8.1 | 8.2 |
| CaO | 16.2 | 16.4 |
| MgO | 3.0 | 3.0 |
| $SO_3$ | 0.04 | 0 |
| $Na_2O$ | 2.8 | 2.8 |
| $K_2O$ | 0.4 | 0.4 |
| $TiO_2$ | 1.44 | 1.5 |
| Unburnt carbon | 0.45 | 0 |
| Sulfide | 0.19 | 0 |

Table 6

| Component | Residue II (wt.%) | Inorganic Foamed Granules (wt.%) |
|---|---|---|
| ig. loss | 0.3 | 0 |
| $SiO_2$ | 51.9 | 53.0 |
| $Al_2O_3$ | 23.9 | 24.4 |
| $Fe_2O_3$ | 5.5 | 5.6 |
| CaO | 11.1 | 11.4 |
| MgO | 2.0 | 2.0 |
| $SO_3$ | 0.04 | 0 |
| $Na_2O$ | 2.06 | 2.1 |
| $K_2O$ | 0.71 | 0.7 |
| $TiO_2$ | 0.81 | 0.8 |
| Unburnt carbon | 0.25 | 0 |
| Sulfide | 0.02 | 0 |

Table 7

| Component | Obsidian (wt.%) | Inorganic Foamed Granules (wt.%) |
|---|---|---|
| ig. loss | 1.31 | 0 |
| $SiO_2$ | 74.77 | 75.8 |
| $Al_2O_3$ | 13.07 | 13.2 |
| $Fe_2O_3$ | 1.21 | 1.2 |
| CaO | 1.13 | 1.1 |
| MgO | 0.20 | 0.2 |
| $SO_3$ | 0.02 | 0 |
| $Na_2O$ | 3.69 | 3.7 |
| $K_2O$ | 4.58 | 4.6 |
| $TiO_2$ | – | – |
| Unburnt carbon | – | – |
| Sulfide | – | – |

EXAMPLE 3

A residue (true specific gravity: 2.72, m.p.: 1,320°C) collected from a coal gasification furnace according to a Texaco process was crushed in a jaw crusher and sieved using sieves of mesh set forth in Table 8. Granular size distribution of shale employed in the following comparison examples is also set foth in Table 8.

The chemical composition of the employed amorphous residue is given in Table 9. The X-ray diffraction analysis indicated that the employed amorphous residue is amorphous.

Table 8

| Granular Size (mm) | Residue (wt.%) | Shale (wt.%) |
|---|---|---|
| 20 - 10 | 4.9 | 0 |
| 10 - 5 | 4.5 | 0 |
| 5 - 2.5 | 31.2 | 0 |
| 2.5 - 1.2 | 36.5 | 50.0 |
| 1.2 - 0.6 | 14.2 | 22.0 |
| 0.6 - | 8.7 | 28.0 |

On a ceramic evaporating dish was placed 100 g. of the above-treated residue having a granular size of not greater than 2.5 mm. This was then placed in an electric furnace equipped with an automatic temperature-controlling device utilizing molybdenum silicide heat generator. The temperature of the electric furnace initially was 400°C.

The temperature of the electric furnace was then elevated to 800°C at a rate of 5°C/min. When the temperature reached 800°C, the residue was taken out of the furnace. Thus, inorganic foamed granules were produced.

The resulting foamed granules had a true specific gravity of 1.71, a unit weight of 0.91 kg/ℓ, a 24 hr-water absorption of 0.3 wt.%, and a mean crushing strength of 35 kgf. The chemical composition of the resulting foamed granules is set forth in Table 9. The obtained inorganic foamed granules were expanded as many as approx. 1.3 times as compared with the residue.

14

Table 9

| Component | Residue (wt.%) | Inorganic Foamed Granules (wt.%) |
|---|---|---|
| ig. loss | – 0.2 | 0 |
| $SiO_2$ | 42.6 | 43.1 |
| $Al_2O_3$ | 25.7 | 26.0 |
| $Fe_2O_3$ | 10.4 | 10.5 |
| CaO | 14.9 | 15.1 |
| MgO | 2.2 | 2.2 |
| $Na_2O$ | 2.2 | 2.2 |
| $K_2O$ | 0.9 | 0.9 |
| $SO_3$ | 0.4 | 0 |
| Unburnt carbon | 0.3 | 0 |
| Other Sulfide | 0.15 | 0 |

COMPARISON EXAMPLE 3

The procedure of Example 3 was repeated except that the shale (true specific gravity: 2.56, unit weight: 1.10 kg/ℓ, m.p.: 1,210°C) as set forth in Table 10 was employed in place of the residue and the maximum heating temperature was set to 1,180°C. Thus, foamed granules were produced.

The resulting foamed granules had a unit weight of 0.64 kg/ℓ, a 24 hr-water absorption of 14.9 % and a mean crushing strength of 1.8 kgf. The chemical composition of the resulting foamed granules are set forth in Table 10.

15

## Table 10

| Component | Shale (wt.%) | Inorganic Foamed Granules (wt.%) |
|---|---|---|
| ig. loss | 2.4 | 0 |
| $SiO_2$ | 63.6 | 65.2 |
| $Al_2O_3$ | 18.3 | 18.8 |
| $Fe_2O_3$ | 5.5 | 5.6 |
| CaO | 2.1 | 2.2 |
| MgO | 1.6 | 1.6 |
| $Na_2O$ | 3.3 | 3.4 |
| $K_2O$ | 3.1 | 3.2 |
| Unburnt carbon | 0 | 0 |
| Sulfide | 0 | 0 |

EXAMPLES 4 - 9 & COMPARISON EXAMPLES 4 - 6

The procedure of Example 3 was repeated except that the size distribution of the amorphous residue was changed, and the maximum heating temperature and the temperature rising rate were changed to the temperatures and rates, respectively, as set forth in Table 11.

The unit weight, specific gravity under oven-dry, 24 hr-water absorption and crushing strength are set forth in Table 12.

Table 11

| | Granular Size (mm) | Maximum Temp.($^{O}$C) | Rise of Temp. ($^{O}$C/min) |
|---|---|---|---|
| Example 3 | not more than 2.5 | 800 | 5 |
| Example 4 | not more than 0.6 | 800 | 5 |
| Example 5 | 0.6 – 1.2 | 800 | 5 |
| Example 6 | 1.2 – 2.5 | 800 | 5 |
| Example 7 | not more than 2.5 | 700 | 5 |
| Example 8 | not more than 2.5 | 800 | 15 |
| Example 9 | not more than 2.5 | 800 | 50 |
| Com. Ex 4 | not less than 2.5 | 800 | 5 |
| Com. Ex 5 | 0 – 2.5 | 550 | 5 |
| Com. Ex 6 | 0 – 2.5 | 1000 | 5 |

Table 12

| | Unit weight (kg/ℓ) | Specific Gravity (Oven-dry) | Water Absorp. (wt.%) | Crushing Strength (kgf) |
|---|---|---|---|---|
| Example 3 | 0.91 | 1.71 | 0.3 | 35 |
| Example 4 | 1.09 | 2.05 | 0.2 | 50 |
| Example 5 | 0.95 | 1.79 | 0.3 | 38 |
| Example 6 | 0.69 | 1.25 | 2.8 | 16 |
| Example 7 | 1.04 | 1.91 | 0.3 | 43 |
| Example 8 | 0.77 | 1.40 | 2.0 | 22 |
| Example 9 | 0.61 | 1.11 | 3.1 | 11 |
| Com. Ex 4 | 0.55 | 1.00 | 3.1 | 5 |
| Com. Ex 5 | 1.30 | 2.37 | 0.2 | 61 |
| Com. Ex 6 | 0.45 | 0.81 | 5.6 | 2 |

EXAMPLE 10

The same amorphous residue as in Example 3 was heated in a rotary kiln (effective inner diameter: 0.45 m, length: 12 m). The heating conditions were as follows:

Temperature at the bottom of rotary kiln: 270°C
Temperature at burning zone: 750°C
Retention period for amorphous residue: 90 min.

The unit weight, specific gravity under oven-dry, 24 hr-water absorption and crushing strength of the resulting inorganic foamed granules are set forth in Table 13.

COMPARISON EXAMPLE 7

The procedure of Example 10 was repeated except that the amorphous residue was replaced with the same shale as in Comparison Example 3 and the temperatures at the bottom of rotary kiln and the burning zone were changed to 300°C and 780°C, respectively, to obtain inorganic foamed granules.

The unit weight, specific gravity under oven-dry, 24 hr-water absorption and crushing strength of the resulting inorganic foamed granules are set forth in Table 13.

Table 13

| | Unit weight (kg/$\ell$) | Specific Gravity (Oven-dry) | Water Absorp. (wt.%) | Crushing Strength (kgf) |
|---|---|---|---|---|
| Example 10 | 0.87 | 1.64 | 0.3 | 34 |
| Com. Ex. 7 | 1.03 | 2.39 | 5.3 | 26 |

**Claims**

1. A process for the preparation of inorganic foamed granules comprising 60 wt.% or less of SiO₂, 20 wt.% or more of Aℓ₂O₃, and 5 wt.% or more of CaO and having a unit weight in the range of 0.05 to 1.2 kg/ℓ, which comprises heating an amorphous residue obtained by partial oxidation of coal, at a temperature of not lower than 600° C, whereby foaming the amorphous residue.

2. The process for the preparation of inorganic foamed granules as claimed in claim 1, wherein the heating is performed at a temperature in the range of 700 - 1,200° C to prepare the granules having a unit weight in the range of 0.05 to 0.6 kg/ℓ.

3. The process for the preparation of inorganic foamed granules as claimed in claim 1, wherein the heating is performed at a temperature in the range of 660-850° C to prepare the granules having a unit weight in the range of 0.6, not inclusive, to 1.2 kg/ℓ.

4. The process for the preparation of inorganic foamed granules as claimed in any claim of claims 1 to 3, wherein the foamed granules comprise 60 - 30 wt.% of SiO₂, 20 - 40 wt.% Aℓ₂O₃, and 5 - 30 wt.% CaO.

5. The process for the preparation of inorganic foamed granules as claimed in any claim of claims 1 to 3, wherein the amorphous residue contains SiO₂, Aℓ₂O₃, CaO, and at least one component selected from the group consisting of a carbonaceous component or a sulfur component.

6. The process for the preparation of an inorganic foamed granule as claimed in any claim of claims 1 to 3, wherein the amorphous residue is a residue collected from a furnace for coal gasification.

7. The process for the preparation of an inorganic foamed granule claimed in any claim of claims 1 to 3, wherein the amorphous residue is a residue collected from a furnace for coal gasification in which the coal gasification is performed at a temperature of not lower than a softening point of ash of a used coal.

**Revendications**

1. Procédé pour préparer des granulés minéraux à l'état de mousse comprenant 60 % en poids ou moins de SiO₂, 20 % en poids ou plus de Al₂O₃ et 5 % en poids ou plus de CaO et possédant un poids unité situé dans la gamme allant de 0,05 à 1,2 kg/l, et qui consiste à chauffer un résidu amorphe obtenu par

EP 0 193 363 B1

oxydation partielle du charbon, à une température non inférieure à 600°C, ce qui amène le résidu amorphe à l'état de mousse.

2. Procédé pour préparer des granulés minéraux à l'état de mousse selon la revendication 1, selon lequel le chauffage est exécuté à une température située dans la gamme de 700 à 1200°C pour la préparation des granulés possédant un poids unité situé dans la gamme allant de 0,05 à 0,6 kg/l.

3. Procédé pour préparer des granulés minéraux à l'état de mousse selon la revendication 1, caractérisé en ce que le chauffage est exécuté à une température située dans la gamme de 660-850°C pour la préparation des granulés possédant un poids unité situé dans la gamme allant de 0,6, non compris, à 1,2 kg/l.

4. Procédé pour préparer les granulés minéraux à l'état de mousse selon l'une quelconque des revendications 1 à 3, selon lequel les granulés à l'état de mousse comprennent 60-30 % en poids de $SiO_2$, 20-40 % en poids de $Al_2O_3$ et 5-30 % en poids de CaO.

5. Procédé pour préparer des granulés minéraux à l'état de mousse selon l'une quelconque des revendications 1 à 3, selon lequel le résidu amorphe contient du $SiO_2$, du $Al_2O_3$ et du CaO et au moins un composant choisi dans le groupe comprenant un composant carboné ou un composant du soufre.

6. Procédé pour préparer un granulé minéral à l'état de mousse selon l'une quelconque des revendications 1 à 3, selon lequel le résidu amorphe est un résidu collecté à partir d'un four utilisé pour la gazéification du charbon.

7. Procédé pour préparer un granulé minéral à l'état de mousse selon l'une quelconque des revendications 1 à 3, selon lequel le résidu amorphe est un résidu collecté à partir d'un four servant à réaliser la gazéification du charbon et dans lequel cette gazéification du charbon est exécutée à une température non inférieure à un point de ramollissement de la cendre d'un charbon utilisé.

## Patentansprüche

1. Verfahren für die Herstellung anorganischer geschäumter Körnchen mit 60 Gew% oder weniger $SiO_2$, 20 Gew% oder mehr $Al_2O_3$ und 5 Gew% oder mehr CaO und einem Einheitsgewicht im Bereich von 0,05 bis 1,2 kg/l, das das Erhitzen eines amorphen Rests, der durch Teiloxidation von Kohle erhalten wird, auf eine Temperatur von nicht unter 600° einschließt, wobei der amorphe Rest aufschäumt.

2. Verfahren für die Herstellung anorganischer geschäumter Körnchen wie in Anspruch 1 beansprucht, bei dem das Erhitzen bei einer Temperatur im Bereich von 700-1200°C erfolgt, um Körnchen mit einem Einheitsgewicht im Bereich von 0,05 bis 0,6 kg/l zu erhalten.

3. Verfahren für die Herstellung anorganischer geschäumter Körnchen wie in Anspruch 1 beansprucht, bei dem das Erhitzen bei einer Temperatur im Bereich von 660-850°C erfolgt, um Körnchen mit einem Einheitsgewicht im Bereich von 0,6 (nicht selbst eingeschlossen) bis 1,2 kg/l zu erhalten.

4. Verfahren für die Herstellung anorganischer geschäumter Körnchen wie in einem beliebigen der Ansprüche 1 bis 3 beansprucht, bei dem die geschäumten Körnchen 60-30 Gew% $SiO_2$, 20-40 Gew% $Al_2O_3$ und 5-30 Gew% CaO enthalten.

5. Verfahren für die Herstellung von anorganischen geschäumten Körnchen wie in einem beliebigen der Ansprüche 1 bis 3 beansprucht, bei dem der amorphe Rest $SiO_2$, $Al_2O_3$, CaO und zumindest einen Bestandteil aus der Gruppe kohlenhaltige Komponente und Schwefelkomponente enthält.

6. Verfahren für die Herstellung eines anorganischen geschäumten Körnchens, wie in einem beliebigen der Ansprüche 1 bis 3 beansprucht, bei dem der amorphe Rest ein bei der Kohlevergasung in einem Ofen gesammelter Rest ist.

7. Verfahren für die Herstellung eines anorganischen geschäumten Körnchens wie in einem beliebigen der Ansprüche 1 bis 3 beansprucht, bei dem der amorphe Rest ein Rest ist, der in einem Ofen für die Kohlevergasung gesammelt wurde, wobei die Kohlevergasung bei einer Temperatur nicht unterhalb des Erweichungspunkts der Asche aus der verwendeten Kohle liegt.

Fig.1

# Fig. 2

EP 0 193 363 B1